# EUROPEAN PATENT SPECIFICATION

(11) **EP 1 074 698 B1**
(45) Date of publication and mention of the grant of the patent: **29.02.2012**
(21) Application number: 99307783.3
(22) Date of filing: 01.10.1999
(51) Int. Cl.: F01D 9/06, F16L 25/00

(54) **A gas turbine comprising coated coolant supply tubes**
Gasturbine mit beschichteten Leitungen eines Kühlmediums
Turbine à gaz comprenant des tubes d'alimentation de fluide de refroidissement revêtus

(30) Priority: 03.08.1999 US 368458
(43) Date of publication of application: 07.02.2001
(73) Proprietor: GENERAL ELECTRIC COMPANY, Schenectady, NY 12345 (US)
(72) Inventor: Mashey, Thomas Charles, Athens, New York 12015 (US)
(74) Representative: Illingworth-Law, William Illingworth

(56) References cited:
- WO-A-95/25185
- US-A- 3 839 024
- US-A- 4 980 241
- US-A- 5 682 596
- HIRVONEN J-P ET AL: "PRESENT PROGRESS IN THE DEVELOPMENT OF LOW FRICTION COATINGS" SURFACE AND COATINGS TECHNOLOGY, ELSEVIER, AMSTERDAM, NL, vol. 80, no. 1/2, 1996, pages 139-150, XP000994576 ISSN: 0257-8972

## Description

The present invention relates to gas turbines having rotational components cooled by a thermal medium flowing within the gas turbine rotor and particularly relates to coatings on the thermal medium supply and return tubes, supporting elements and seal assemblies therefor to reduce the coefficient of friction between the tubes and the supporting elements and between seal surfaces. In my prior U.S. patent application Serial No. 09/334,187, filed June 16, 1999, there is disclosed a gas turbine having a closed cooling circuit for supplying a thermal medium, for example, cooling steam from a rotor bore, radially outwardly toward the rim of the rotor, axially along the rotor rim and radially outwardly to turbine buckets for cooling the buckets. Additionally, the cooling circuit includes a return for the now-heated cooling thermal medium to a supply via the rotor rim, and the bore tube assembly. In that arrangement, a plurality of circumferentially spaced supply and return tubes extend through openings in stacked rotor wheels and spacers forming the rotor body. The supply and return tubes have lands at axially spaced positions along the tubes for contact with support elements in the wheels and spacers. Document US 2791091 discloses another gas turbine cooling configuration according to the state of the art.

These axial tubes and support elements are located at a significant distance from the axis of the rotor. Those locations subject the tubes to substantial centrifugal forces during turbine operation, which causes significant contact forces between the tubes and the supporting elements. Moreover, because the tubes carry the thermal cooling medium, the tubes will heat more quickly than the rotor structure, causing axial displacement of the tubes relative to the rotor structure and supporting structure. The contact force caused by the centrifugal action of the rotor rotation, coupled with the contact friction coefficient, produces a substantial axial resistance to thermal expansion of the tubes. The magnitude of this resistance to axial displacement of the tubes is a direct determinant of the state of axial stresses in the tubes. Consequently, there is a need to reduce the axial stresses of the thermal medium carrying tubes to improve the service life of the tubes.

In addition, there are seal assemblies at the interface of axially adjacent wheels and spacers to seal between the respective cavities between the wheels and spacers surrounding the tubes and cavities outwardly of the tube supporting elements. Those tube supporting elements each include a bushing, an axially opposite sleeve spaced from the bushing and an annular tapered seal ring in an annular recess in the bushing engaging the bushing and the sleeve. The mating surfaces of the sealing ring and the bushing and sleeve also wear over time, requiring replacement of the seal and ring.

In accordance with the present invention, to reduce the axial stresses in the thermal medium carrying tubes, the coefficient of friction between the tubes and their supporting elements is substantially reduced. Particularly, coatings are provided on one or both of the contacting surfaces between the tubes and the supporting elements for the tubes. Particularly, the coatings are provided on lands of the tubes and the inside contact surfaces of bushings supporting the tubes in the rotor. The surfaces to be coated are first roughened, for example, by shot peening to impart compressive stresses in the metal. A cobalt-based alloy, for example, Triballoy T800, is applied to the roughened surface at high temperature. The coating is sprayed onto the surface at high velocity to form a substantial bond at the molecular level with the nickel-based alloy of the tubes and support elements, e.g., bushings, and without disruption of the parent metal. This initial coating is then machined to provide a smooth base for the application of a second coating and to provide a smooth interface between the tubes and supporting elements. The second coating is an anti-wear/fretting/galling ceramic-based lubricant. This lubricant is sprayed onto the initial coating and baked, for example, at 539°C, (100°F) for about one-half hour and at reduced temperature, for example, 260°C, (500°F) for about another half-hour. The lubricant is a dry film lubricant containing molybdenum disulfide, graphite, a lead-based glass frit and antimony trioxide. The lubricant contains less than 1% of water. With the foregoing coatings applied both to the outer surface of the tube lands and to the inside arcuate surfaces of the bushings, a very low coefficient of frictional contact between those surfaces is provided, affording low resistance to axial movement of the tubes relative to the supporting elements. This, in turn, improves the wear life of the interfacing parts.

The coatings are also applied to the contacting surfaces of the seal assemblies and particularly the seal ring and the adjacent bushing and sleeve. Thus, the annular recess formed in the bushing and the axial end face of the sleeve are coated, as previously described. Additionally, the inner and outer contact surfaces of the sealing ring are likewise coated such that a low coefficient of friction contact between the sealing ring and the bushing and sleeve is afforded.

In a preferred embodiment according to the present invention, there is provided in a gas turbine having metal tubes for conveying a cooling medium and metal support surfaces for the tubes, a coating on one of the tubes and surfaces affording a low coefficient of friction between one of the tubes and the surfaces at an interface therebetween, comprising a first coating of cobalt-based alloy overlying base material of one of the tubes and the surfaces and a second ceramic-based coating overlying the first coating.

In a further preferred embodiment according to the present invention, there is provided for a gas turbine, a tube for supplying a cooling medium, said tube having raised lands at axially spaced locations therealong for mounting the tubes in support elements for the turbine, a coating on the outer surfaces of the lands affording a low coefficient of friction between the lands and the supporting elements at an interface therebetween, the coating comprising a first cobalt-based alloy overlying the lands of the tube and a second ceramic-based coating overlying the first coating to reduce friction between the lands and the supporting elements.

In a still further preferred embodiment according to the present invention, there is provided in a gas turbine having a rotor comprised of axially stacked rotor wheels and spacers and aligned openings spaced from an axis of rotation of the rotor, the aligned openings of the wheels and spacers receiving a tube extending in an axial direction, a seal assembly about the tube at an interface of one of the wheels and one of the spacers, comprising a generally annular seal support in part received in a first opening in one of the wheels and spacers and including a generally radially extending flange in axial registration with an opposed face of another of the wheel and spacer, a seat bushing in part received in a second opening of another wheel and spacer in axial opposition to the first opening and having a seat, a seal between the seal support and the bushing, the seal including an annular frusto-conically shaped element having a radial outer edge portion engaging the seal support and a radially inner edge portion engaging the seat for sealing between the seal support and the seat, a first cobalt-based alloy overlying base material of one of the seal supports and the outer edge portion of the seal ring and a second ceramic-based coating overlying the first coating, a third cobalt-based alloy overlying one of the seat and the radially inner edge portion of the seal element and a fourth ceramic-based coating overlying the third coating.

The invention will now be described in greater detail, by way of example, with reference to the drawings, in which:-
FIGURE 1 is a cross-sectional view of a portion of a gas turbine illustrating a turbine section;
FIGURE 2 is a fragmentary perspective view of portions of a turbine rotor with parts broken out and in cross-section for ease of illustration;
FIGURE 3A is a fragmentary enlarged cross-sectional view illustrating, in cross-section, a rim of the rotor with the thermal medium return tube being illustrated;
FIGURE 3B is an enlarged cross-sectional view of an aft portion of the rotor adjacent its rim illustrating the location of the aft land of a thermal medium return tube and supporting busing according to the present invention;
FIGURES 4 and 5 are fragmentary cross-sectional views of the thermal medium supply and return tubes, respectively, with portions broken out for ease of illustration;

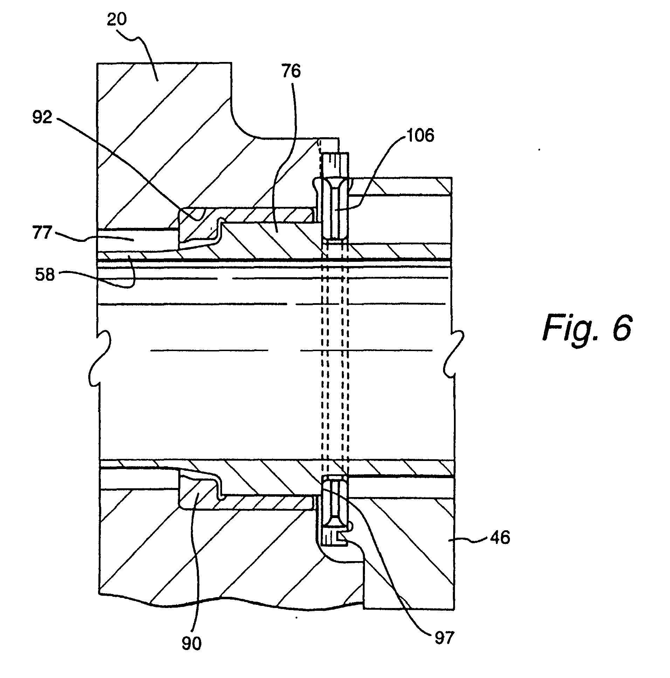

FIGURE 6 is an enlarged fragmentary cross-sectional view illustrating the aft land and supporting bushing;

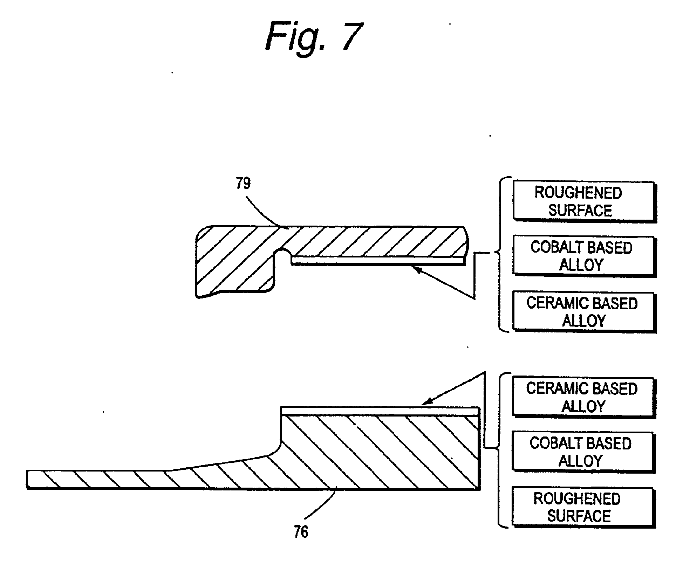

FIGURE 7 is an exploded schematic representation of the coatings on the interior face of the support elements and the exterior surfaces of the lands of the thermal medium carrying tubes; and
FIGURE 8 is an enlarged cross-sectional view of a combined bushing and seal.

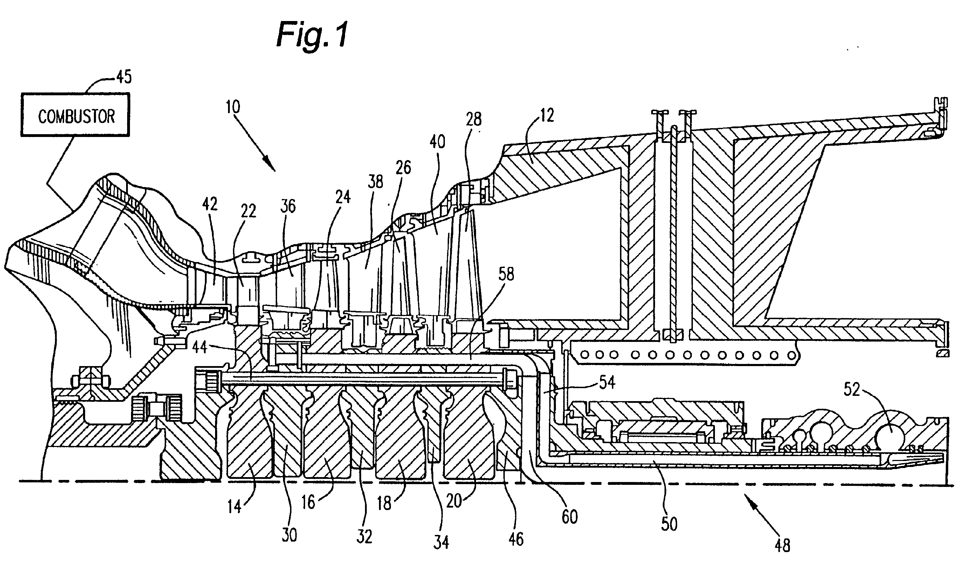

Referring to Figure 1, there is illustrated a turbine section, generally designated 10, incorporating the present invention. The turbine section 10 includes a turbine housing 12 surrounding a turbine rotor R. Rotor R includes in the present example four successive stages comprising wheels 14, 16, 18 and 20, carrying a plurality of circumferentially spaced buckets or blades 22, 24, 26 and 28, respectively. The wheels are arranged alternately between spacers 30, 32 and 34. The outer rims of spacers 30, 32 and 34 lie in radial registration with a plurality of stator blades or nozzles 36, 38 and 40, with the first set of nozzles 42 lying forwardly of the first buckets 22. Consequently, it will be appreciated that a four-stage turbine is illustrated wherein the first stage comprises nozzles 42 and buckets 22; the second stage, nozzles 36 and buckets 24; the third stage, nozzles 38 and buckets 26 and, finally, the fourth stage, nozzles 40 and buckets 28. The rotor wheels and spacers are secured one to the other by a plurality of circumferentially spaced bolts 44 passing through aligned openings in the wheels and spacers. A plurality of combustors, one being illustrated at 45, are arranged about the turbine section to provide hot gases of combustion through the hot gas path of the turbine section in which the nozzles and buckets for rotating the rotor are disposed. The rotor also includes an aft disk 46 formed integrally with a bore tube assembly, generally designated 48.

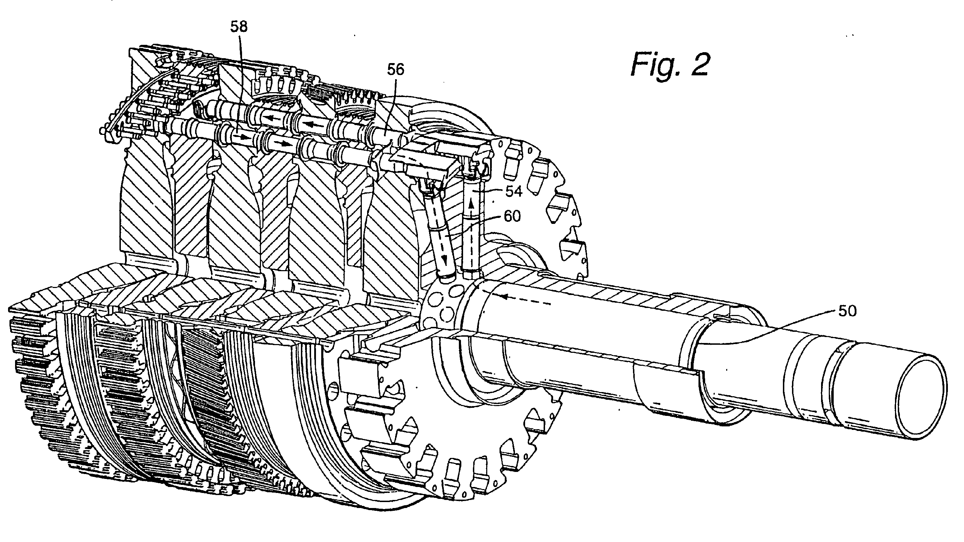

At least one and preferably both sets of buckets 22 and 24 of the first two stages are provided with a thermal medium for cooling, the thermal medium preferably being cooling steam. Cooling steam is provided and returned through the bore tube assembly 48. With reference to Figures 1 and 2 and in a preferred embodiment, the bore tube assembly includes an annular passage 50 supplied with cooling steam, from a steam plenum 52 for flow to a plurality of radially extending tubes 54 provided in the aft disk 46. Tubes 54 communicate with circumferentially spaced, axially extending thermal medium supply tubes 56 in communication with cooling passages in the first and second-stage buckets. Spent or returned cooling steam at an elevated temperature flows from the first and second-stage buckets through a plurality of circumferentially spaced, axially extending return tubes 58. Return tubes 58 communicate at their aft ends with radially inwardly extending return tubes 60 in aft disk 46. From tubes 60, the spent steam flows into the central bore of the bore tube assembly 48 for return to a supply or for flow to steam turbines for use in a combined-cycle system.

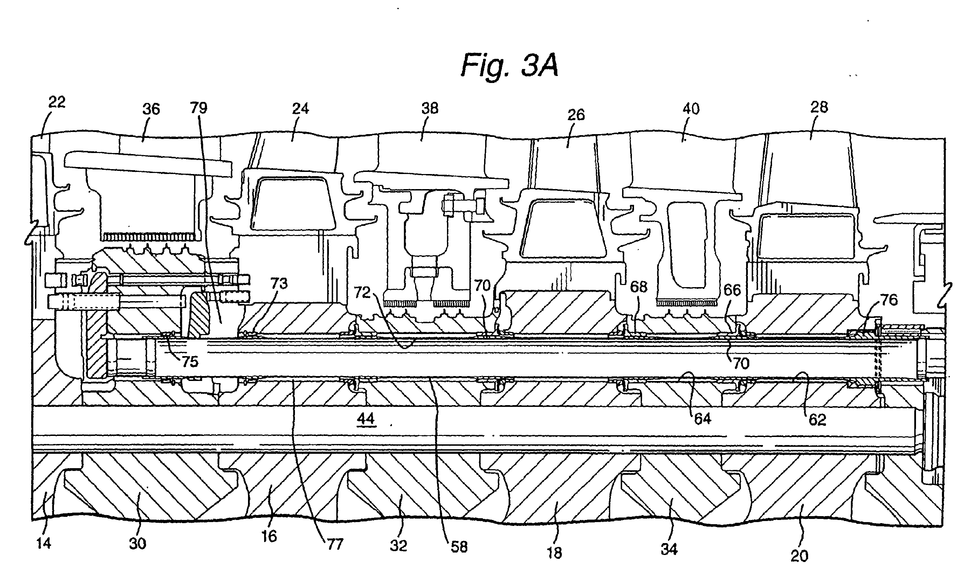

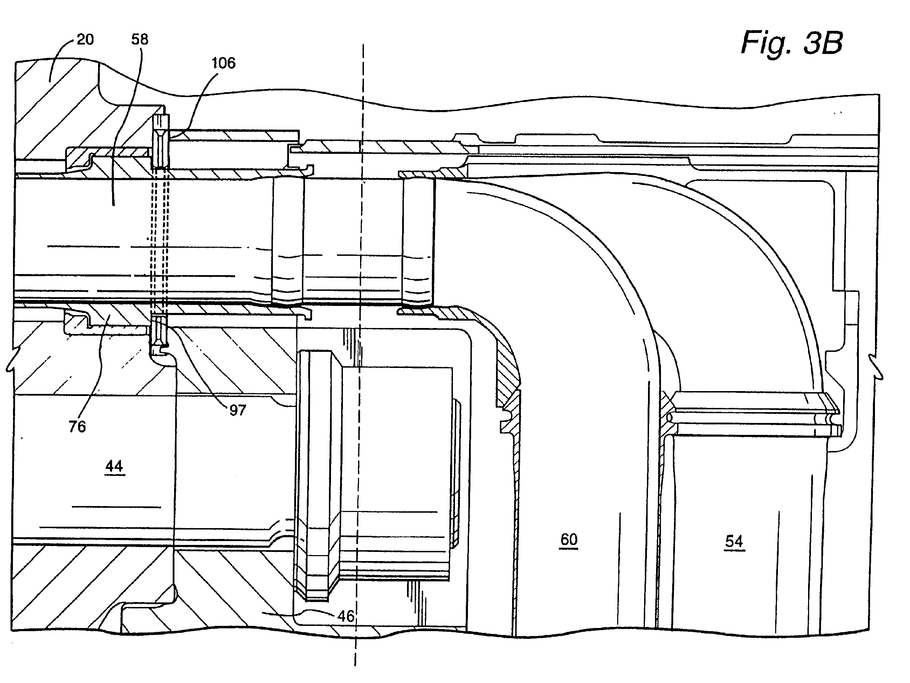

It will be appreciated from the foregoing description that the axially extending supply and return tubes 56 and 58, respectively, lie adjacent the rim of the rotor, with each supply and return tube extending through axially aligned openings through the axially stacked wheels and spacers. For example, the aligned openings 62 and 64 of wheels 20 and spacers 34, respectively, are illustrated in Figure 3A. Similar aligned openings are provided in the wheels and spacers of the first, second and third stages.

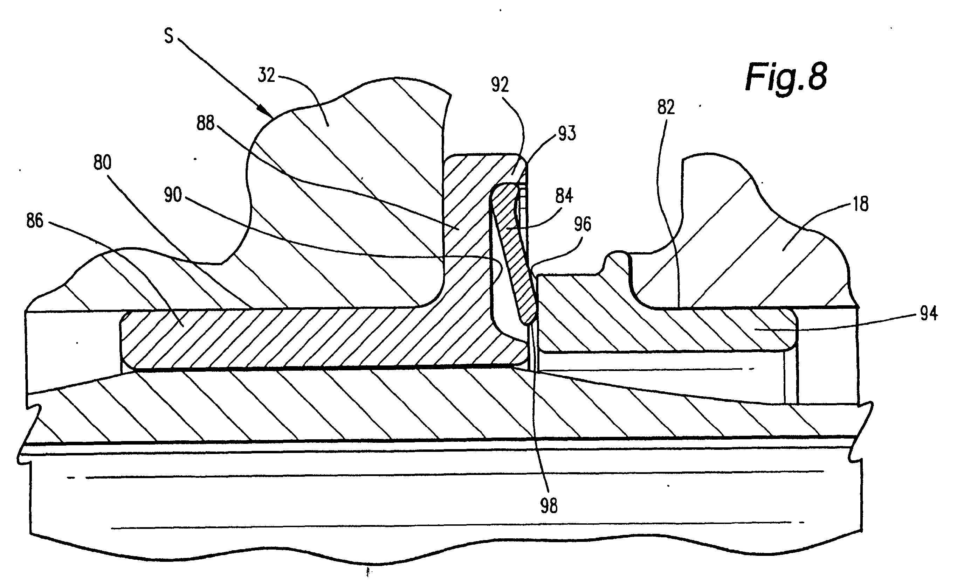

As illustrated in Figure 3A, support elements comprising bushings are provided at various locations within the openings of the wheels and spacers for supporting the cooling medium supply and return tubes 56 and 58, respectively. For example, bushings 66 and 68 are disposed adjacent opposite ends of the opening 64 through spacer 34. Similar bushings are disposed at opposite ends of the 2-3 spacer 32. Bushings 73 and 75 are provided at the forward opening of wheel 16 and the aft opening of spacer 30. A bushing 79 is also illustrated at the aft end of the opening through the fourth wheel 20. Similar bushings are provided in the aligned openings for the supply tube. Also, seal assemblies are provided in certain of the bushings and the bushing/seal combination is described hereinafter with respect to Figure 8.

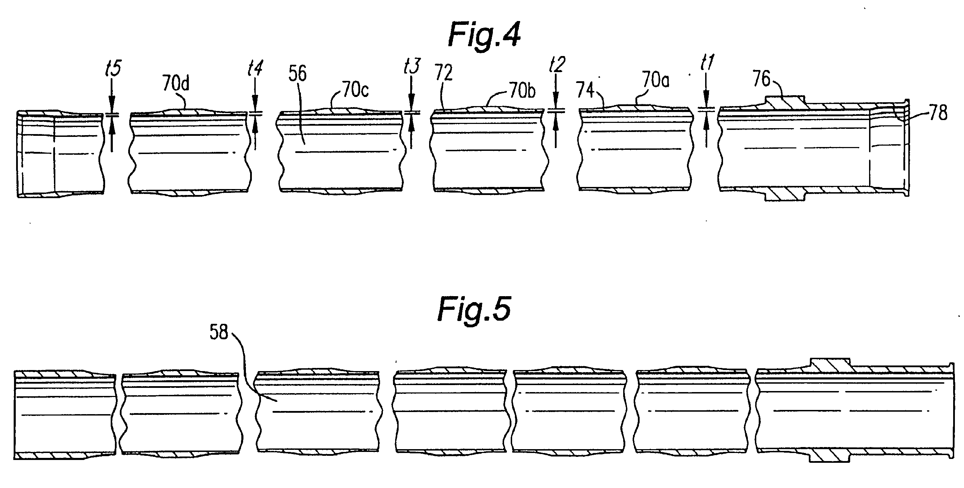

Referring to Figures 4 and 5, the respective supply and return tubes 56 and 58 are illustrated. The tubes are similar in aspects relevant to this invention and a description of one will suffice as a description of the other, except as otherwise noted. Each tube comprises a thin-walled structure having a plurality of raised lands 70 at axially spaced locations along the length of the tube. The axial locations of the lands 70 coincide with the locations of the bushings in the openings through the wheels and spacers. Between the lands 70 are thin-walled tube sections 72 (Figure 3A). From a review of Figures 4 and 5, it will be appreciated that the outer exterior surfaces of the lands 70 are radially outwardly of the exterior surface of the thin-walled sections 72. Transition sections 74 are provided between each land 70 and adjacent thin-walled sections 72. The transition sections 74 have arcuate outer surfaces transitioning radially inwardly from the outer surfaces of the lands to the outer surfaces of the thin-walled sections 72. These transition areas 74 smooth the stresses from the raised lands to the thin sections. An enlarged land or flange 76 is provided adjacent an aft portion of each tube, for reasons explained below. As illustrated in Figure 4, the interior end portions of the supply tubes 56 have concave surfaces 78 for mating engagement with convex surfaces of spoolies for flowing the thermal medium into and out of the return tubes.

It will be appreciated that the thin-walled sections are not supported between the lands and that, in the high centrifugal field during rotor rotation, the heavier the tube, the greater will be the friction forces carried by the tubes at the support points between the lands and the bushings. As the tubes are subjected to thermal or mechanical stresses, the higher the loading at the supports, the higher the friction load as the tube thermally grows in an axial direction from its fixed aft end. As a result of fixing the aft end of the tubes, the friction load developed at each support point creates a loading which is cumulative from forward to aft. That is, actual tube loading from thermal growth increases in the aft direction. By varying the thicknesses along the tube and particularly increasing the thicknesses of the tube in the aft direction, the higher frictional loads forwardly of each support can be accommodated. Stated differently, the thinner each thin-walled section becomes in the forward axial direction, the less weight a given support carries and, consequently, a smaller friction load is generated under thermal growth conditions. Because the tubes are fixed at their aft ends, the thermal growth moves axially forwardly. At each support location, the accumulating frictional loading is the loading at that location with the added loading of locations axially forwardly of the given location.

Particularly, the thicknesses t1-t5 of the thin-walled sections 72 between the lands 70 decrease in thickness from the aft end of the tubes 56 and 58 to their forward ends. That is, the wall thickness t1 of the thin-walled section 72 between axially spaced flange 76 and land 70a is thicker than the wall thickness t2 between axially adjacent lands 70a and 70b. Similarly, the wall thickness t2 is greater than the wall thickness t3 of the thin-walled section 72 between axially adjacent lands 70b and 70c. The wall thickness t3 is greater than the wall thickness t4 between lands 70c and 70d. The wall thickness t4 is greater than the wall thickness t5 between axially adjacent lands 70d and the forward end of the tube. Thus, the wall thicknesses of the thin-walled sections 72 decrease from the aft ends of the tubes toward the forward ends of the tubes.

In addition to reducing the friction load developed at each support point by varying the thickness of the tubes, the contacting surfaces of the tubes and supporting elements, for example, the lands and bushings, are provided with low coefficient of friction coatings. Particularly, a first coating is applied to the lands and to the interior surfaces of the bushings in contact with the lands. The first coating is preferably a high density cobalt-based alloy which is spray coated on the surfaces at very high temperature, e.g., on the order of 2760°C (5000°F). This cobalt-based alloy comprises about 28 parts molybdenum, 17 parts chromium, 3 parts silicon and the balance cobalt. The coating is preferably Triballoy T800 which is a commercially available coating. The composition of the coating is 28Mo-17Cr-3Si. After this first coating is applied, the surface of the coating is machined to provide a smooth surface. The machining action removes approximately one-half of the thickness of the applied coating.

A second coating overlies the first coating. The second coating is preferably an anti-wear/fretting/galling ceramic-based solid film lubricant, one of which is commercially sold under the trade name Lube-Lok by the E/M Corporation. The lubricant comprises molybdenum disulfide. Consequently, a very low coefficient of friction is provided at the interface between the tubes and the supporting elements which forestalls accelerated wear which otherwise would occur upon contact between the bare metal surfaces of the tubes and supporting elements should the film fail, the metal of the surfaces being a nickel alloy.

Further, seal assemblies are provided between the bushings and sleeves of adjacent wheels and spacers. For example, four seal assemblies are provided for the return tube and lie at the interfaces of the wheel 16, spacer 32; spacer 32 and wheel 18; wheel 18 and spacer 34; and spacer 34 and wheel 20. Referring to Figure 8, a seal assembly, for example, between wheel 32 and spacer 18, is illustrated and comprises a support bushing 80, a seat bushing 82 and a seal ring 84. Each support bushing 80 includes a sleeve 86 received in a counterbore of its associated spacer 32. Each support bushing 80 also lies at an axial location coincident with a land of the tube and provides support for the tube at that axial location. Bushing 80 has a radially outwardly directed flange 88 adjacent an end of the sleeve 86. The axial end face of flange 88 includes an annular recess 90 for receiving an outer diameter edge of the seal 84. The outer margin 92 of flange 88 serves as a stop for the seal 84. The seat bushing 82 includes a sleeve 94 having an interior diameter greater than the interior diameter of the sleeve 86 of bushing 80. As illustrated, the land underlying the bushing 80 is spaced inwardly of the seat bushing 82. Seat bushing 82 includes an enlarged radial flange mounting an axially facing bearing surface 96 in axial opposition to the flange 88 of bushing 80. Bearing surface 96 serves as a seat for the inner diameter edge 98 of the seal 84. The seal 84 comprises a shallow frusto-conical section extending between its inner diameter 98 and the outer diameter 93.

Coatings are applied to the contacting surfaces of the bushing 80, the seal ring 84 and seat bushing 82. That is, the coatings of the present invention are provided along the outer portion of the recess 90, along the end face 96 of the seat bushing 82 and the corresponding contact portions of the seal ring 84. Thus, the coatings are applied to the outer margin of seal ring 84 in contact with bushing 90 and the inner diameter edge 98 of the seal 84.

Prior to applying the coatings to these surfaces, the surfaces are roughened. Preferably, the surfaces are roughened by shot peening to put compressive stresses in the surface to retard crack development, which otherwise precipitates failure. Thus, prior to applying the coatings, the lands, bushing and seal surfaces to be coated are shot peened by blowing glass or metal beads at high velocity onto the surfaces to create depressions and, consequently, compressive stresses in the metal. The initial coating of Triballoy T800 is then applied by spraying the coating at high temperature, for example, at about 2760°C (5000°F), to the required thickness. The outer surface of the Triballoy coating is somewhat rough and therefore the coating is machined to afford a smooth surface for receiving the second coating. The ceramic-based second coating is sprayed onto the cobalt-based first coating and baked, for example, at about 538°C (1000°F) for approximately one-half-hour and at above 260°C (500°F) for another half-hour. No further machining is required. It will be appreciated that the coatings are applied to both the outer surfaces of the lands, the interior surfaces of the bushings, and the contact surfaces between the seal rings and the bushings and at like thicknesses. Consequently, the interface between the tubes and the support elements comprises the two low coefficient of friction outer lubricant coatings. The contact between those surfaces offers very low resistance to axial movement of the tubes relative to the bushings and hence accommodates thermal expansion of the tubes. Additionally, the surface life of the tubes is greatly extended by this reduction in resistance to axial displacement of the tubes relative to the rotor. Also, the resistance to wear of the seal rings and the bushings is substantially increased thereby increasing their wear life.

## Claims

1. A gas turbine having a metal tube(s) (56, 58) for conveying a cooling medium and metal support surfaces (66, 68, 73, 75, 79) for said tubes being **characterized by** a coating on one of said tubes and surfaces affording a low coefficient of friction between said one of said tubes and said surfaces at an interface therebetween, the coating comprising:
a first coating of cobalt-based alloy overlying base material of said one of said tubes and said surfaces and a second ceramic-based coating overlying said first coating.

2. A gas turbine according to Claim 1 wherein each of said tubes and said surfaces at the interface therebetween have a first cobalt-based alloy overlying the base metal of each of said tubes and surfaces.

3. A gas turbine according to Claim 1 or 2 wherein the base metal comprises a nickel alloy.

4. A gas turbine according to Claim 1, 2 or 3 wherein the cobalt-based alloy comprises molybdenum.

5. A gas turbine according to Claim 1, 2 or 3 wherein the cobalt-based alloy comprises chromium.

6. A gas turbine according to Claim 1, 2 or 3 wherein the cobalt-based alloy comprises silicon.

7. A gas turbine according to Claim 1, 2 or 3 wherein the cobalt-based alloy comprises cobalt, molybdenum, chromium and silicon.

8. A gas turbine according to Claim 1, 2 or 3 wherein the cobalt-based alloy comprises about 28 parts molybdenum, 17 parts chromium, 3 parts silicon and substantially the balance of cobalt.

9. A gas turbine according to Claim 8 wherein the cobalt-based alloy comprises about 52 parts cobalt.

10. A gas turbine according to any preceding claim wherein the ceramic-based alloy comprises molybdenum disulfide.

11. A gas turbine according to any preceding claim wherein said one of said tubes and said surfaces has a roughened surface underlying said cobalt-based alloy.

12. A gas turbine as claimed in claim 1, wherein the tube(s) (56, 58) has/have raised lands (70) at axially spaced locations therealong for mounting the tubes on the support surfaces (66, 68, 73, 75, 79), the coating being provided on the outer surfaces of said lands and comprising the said first cobalt-based alloy overlying the lands of said tube.

13. A gas turbine according to Claim 12 wherein the support surfaces are provided on support elements having an internal arcuate surface for bearing against said lands, a coating provided on said internal arcuate surface comprised of a first cobalt-based alloy overlying the base metal of said bushing and a second ceramic-based coating overlying said first coating on said bushing whereby the interface between said bushing and said lands comprise the ceramic-based coating.

14. A gas turbine according to claim 1 and having a rotor comprised of axially stacked rotor wheels and spacers and aligned openings spaced from an axis of rotation of the rotor, the aligned openings of said wheels and spacers receiving the tube (56,58) extending in an axial direction, a seal assembly about said tube at an interface of one of said wheels and one of said spacers, comprising:
a generally annular seal support (80) in part received in a first opening in one of said wheels and spacers and including a generally radially extending flange (88) in axial registration with an opposed face of another of said wheel and spacer;
a seat bushing (82) in part received in a second opening of said another wheel and spacer in axial opposition to said first opening and having a seat (96);
a seal between said seal support and said bushing, said seal including an annular frusto-conically shaped element (84) having a radial outer edge portion (93) engaging said seal support and a radially inner edge portion (88) engaging said seat for sealing between said seal support and said seat;
a first cobalt-based alloy coating overlying base material of one of said seal supports and said outer edge portion of said seal ring and a second ceramic-based coating overlying said first coating;
a third cobalt-based alloy coating of the same composition as the first coating overlying one of said seat and said radially inner edge portion of said seal element; and
a fourth ceramic-based coating of the same composition as the second coating overlying said third coating.

## Patentansprüche

1. Gasturbine mit einem Metallrohr(en) (56, 58) zum Transportieren eines Kühlmediums und Metalllagerungsoberflächen (66, 68, 73, 75, 79) für die Rohre, **gekennzeichnet durch** eine Beschichtung auf einem der Rohre und der Oberflächen, die einen niedrigen Reibungskoeffizienten zwischen dem einen von den Rohren und den Oberflächen an einer Schnittstelle dazwischen bietet, wobei die Beschichtung aufweist:
eine erste Beschichtung aus einer Kobalt-basierenden Legierung, die über dem Basismaterial von dem(r) einen der Rohre und der Oberflächen liegt, und eine zweite Keramik-basierende Beschichtung, die über der ersten Beschichtung liegt.

2. Gasturbine nach Anspruch 1, wobei jede(s) von den Rohren und von den Oberflächen an der Schnittstelle dazwischen eine erste Kobalt-basierende Legierung hat, die über dem Basismetall von jedem(r) der Rohre und der Oberflächen liegt.

3. Gasturbine nach Anspruch 1 oder 2, wobei das Basismaterial eine Nickellegierung aufweist.

4. Gasturbine nach Anspruch 1, 2 oder 3, wobei die Kobalt-basierende Legierung Molybdän aufweist.

5. Gasturbine nach Anspruch 1, 2 oder 3, wobei die Kobalt-basierende Legierung Chrom aufweist.

6. Gasturbine nach Anspruch 1, 2 oder 3, wobei die Kobalt-basierende Legierung Silizium aufweist.

7. Gasturbine nach Anspruch 1, 2 oder 3, wobei die Kobalt-basierende Legierung Kobalt, Molybdän, Chrom und Silizium aufweist.

8. Gasturbine nach Anspruch 1, 2 oder 3, wobei die Kobalt-basierende Legierung ca. 28 Teile Molybdän, 17 Teile Chrom und 3 Teile Silizium und im Wesentlichen den Rest in Form von Kobalt aufweist.

9. Gasturbine nach Anspruch 8, wobei die Kobalt-basierende Legierung ca. 52 Teile Kobalt aufweist.

10. Gasturbine nach einem der vorstehenden Ansprüche, wobei die Keramik-basierende Legierung Molybdän-Disulfid aufweist.

11. Gasturbine nach einem der vorstehenden Ansprüche, wobei das/die eine von den Rohren und eine von den Oberflächen eine aufgeraute Oberfläche hat, die unter der Kobalt-basierenden Legierung liegt.

12. Gasturbine nach Anspruch 1, wobei das/die Rohr(e) (56, 58) erhöhte Stege (70) an axial beabstandeten Stellen daran entlang zur Befestigung der Rohre an den Lagerungsflächen (66, 68, 73, 75, 79) hat/haben, wobei die Beschichtung auf den Außenoberflächen der Stege vorgesehen ist und die erste Kobalt-basierende Legierung aufweist, die über den Stegen des Rohres liegt.

13. Gasturbine nach Anspruch 12, wobei die Lagerungsoberflächen auf Lagerungselementen mit einer gebogenen Innenoberfläche für die Lagerung der Stege versehen sind, wobei eine auf der gebogenen Innenoberfläche vorgesehene Beschichtung eine erste Kobalt-basierenden Legierung, die über dem Basismaterial der Buchse liegt, und eine zweite Keramik-basierende Beschichtungsüberzug aufweist, die über der ersten Beschichtung in der Buchse liegt, wodurch die Schnittstelle zwischen der Buchse und den Stegen die Keramik-basierende Beschichtung aufweist.

14. Gasturbine nach Anspruch 1 und mit einem Rotor, der axial gestapelte Rotorscheiben und Abstandshalter und von einer Rotationsachse des Rotors in Abstand angeordnet ausgerichtete Öffnungen aufweist, wobei die ausgerichteten Öffnungen der Scheiben und Abstandshalter das sich in einer axialen Richtung erstreckende Rohr (56, 58), eine Dichtungsanordnung um das Rohr an einer Schnittstelle von einer der Scheiben und einem der Abstandshalter aufnehmen, aufweisend:
eine im Wesentlichen ringförmige Dichtungslagerung (80) die zum Teil in einer ersten Öffnung in einer(m) von den Scheiben und Abstandshaltern aufgenommen ist, und einen sich im Wesentlichen radial erstreckendem Flansch (88) in axialer Ausrichtung zu einer gegenüberliegenden Fläche einer anderen von der Scheibe und des Abstandshalters hat;
eine Sitzbuchse (82), die zum Teil in der zweiten Öffnung der(s) anderen Scheibe und Abstandshalters axial gegenüber der ersten Öffnung aufgenommen ist und einen Sitz (96) hat;
eine Dichtung zwischen der Dichtungslagerung und der Buchse, wobei die Dichtung ein ringförmiges kegelstumpfförmiges Element (84) mit einem radial äußeren Randabschnitt (93) enthält, der mit der Dichtungslagerung im Eingriff steht, und einem radial inneren Randabschnitt (88), der mit dem Sitz für die Abdichtung zwischen der Dichtungslagerung und dem Sitz in Eingriff steht;
eine erste Kobalt-basierende Legierungsbeschichtung, die über dem Basismaterial von einer der Dichtungslagerungen und dem äußeren Randabschnitt des Dichtungsringes liegt, und eine zweite Keramik-basierende Beschichtung, die über der ersten Beschichtung liegt.
eine dritte Kobalt-basierende Legierungsbeschichtung mit derselben Zusammensetzung wie die erste Beschichtung, die über einem von dem Sitz und dem radial inneren Randabschnitt des Dichtungselementes liegt; und
eine vierte Keramik-basierende Beschichtung mit derselben Zusammensetzung wie die zweite Beschichtung, die über der dritten Beschichtung liegt.

## Revendications

1. Turbine à gaz ayant un ou plusieurs tubes métalliques (56, 58) pour acheminer un agent de refroidissement et des surfaces métalliques de support (66, 68, 73, 75, 79) pour lesdits tubes,
**caractérisée par** un revêtement, appliqué sur un desdits tubes et une desdites surfaces, présentant un faible coefficient de frottement entre lesdits un desdits tubes et une desdites surfaces à une interface entre ceux-ci, le revêtement comprenant :
un premier revêtement en alliage à base de cobalt par-dessus la matière de base desdits un desdits tubes et une desdites surfaces et un second revêtement à base de céramique par-dessus ledit premier revêtement.

2. Turbine à gaz selon la revendication 1, dans laquelle chacun desdits tubes et chacune desdites surfaces, à l'interface entre ceux-ci, ont un premier alliage à base de cobalt par-dessus le métal de base de chacun desdits tubes et de chacune desdites surfaces.

3. Turbine à gaz selon la revendication 1 ou 2, dans laquelle le métal de base contient un alliage de nickel.

4. Turbine à gaz selon la revendication 1, 2 ou 3, dans laquelle l'alliage à base de cobalt contient du molybdène.

5. Turbine à gaz selon la revendication 1, 2 ou 3, dans laquelle l'alliage à base de cobalt contient du chrome.

6. Turbine à gaz selon la revendication 1, 2 ou 3, dans laquelle l'alliage à base de cobalt contient du silicium.

7. Turbine à gaz selon la revendication 1, 2 ou 3, dans laquelle l'alliage à base de cobalt contient du cobalt, du molybdène, du chrome et du silicium.

8. Turbine à gaz selon la revendication 1, 2 ou 3, dans laquelle l'alliage à base de cobalt contient environ 28 parties de molybdène, 17 parties de chrome, 3 parties de silicium, le reste étant sensiblement constitué de cobalt.

9. Turbine à gaz selon la revendication 8, dans laquelle l'alliage à base de cobalt contient environ 52 parties de cobalt.

10. Turbine à gaz selon l'une quelconque des revendications précédentes, dans laquelle l'alliage à base de céramique contient du bisulfure de molybdène.

11. Turbine à gaz selon l'une quelconque des revendications précédentes, dans laquelle ledit un desdits tubes et desdites surfaces a une surface dépolie située sous ledit alliage à base de cobalt.

12. Turbine à gaz selon la revendication 1, dans laquelle le/les tube(s) (56, 58) a/ont, à des emplacements espacés axialement le long de celui-ci/ceux-ci, des portées en relief (70) pour faire reposer les tubes sur les surfaces de support (66, 68, 73, 75, 79), le revêtement étant présent sur les surfaces extérieures desdites portées et contenant ledit premier alliage à base de cobalt par-dessus les portées dudit tube.

13. Turbine à gaz selon la revendication 12, dans laquelle les surfaces de support sont présentes sur des éléments de support ayant une surface interne arquée destinée à appuyer contre lesdites portées, un revêtement présent sur ladite surface interne arquée contenant un premier alliage à base de cobalt par-dessus le métal de base d'une douille et un second alliage à base de céramique par-dessus ledit premier revêtement sur ladite douille, à la suite de quoi l'interface entre ladite douille et lesdites portées comporte le revêtement à base de céramique.

14. Turbine à gaz selon la revendication 1 et ayant un rotor constitué de roues de rotor et d'entretoises en empilement axial et d'ouvertures alignées espacées par rapport à un axe de rotation du rotor, les ouvertures alignées desdites roues et entretoises qui reçoivent le tube (56, 58) s'étendant dans une direction axiale, d'un ensemble d'étanchéité autour dudit tube à une interface d'une desdites roues et d'une desdites entretoises, comportant :
un support globalement annulaire (80) de joint logé partiellement dans une première ouverture ménagée dans l'une desdites roues et entretoises et comprenant une bride (88) s'étendant d'une manière globalement radiale, coïncidant axialement avec une face opposée d'une autres desdites roues et entretoises ;
une douille (82) de siège partiellement logée dans une seconde ouverture de ladite autre roue et entretoise, axialement opposée à ladite première ouverture et ayant un siège (96) ;
un joint d'étanchéité entre ledit support de joint et ladite douille, ledit joint comprenant un élément annulaire (84) de forme tronconique ayant un bord extérieur radial (93) au contact dudit support de joint et un bord radialement intérieur (88) au contact dudit siège pour assurer l'étanchéité entre ledit support de joint et ledit siège ;
un premier revêtement en alliage à base de cobalt par-dessus la matière de base d'un desdits supports de joints et ladite partie formant bord extérieur dudit joint annulaire et un deuxième revêtement à base de céramique par-dessus ledit premier revêtement ;
un troisième revêtement en alliage à base de cobalt, qui a la même composition que le premier revêtement, par-dessus ledit siège ou ladite partie formant bord radialement intérieur dudit élément d'étanchéité ; et
un quatrième revêtement à base de céramique, qui a la même composition que le deuxième revêtement, par-dessus ledit troisième revêtement.
